# EUROPEAN PATENT APPLICATION

(11) **EP 4 516 433 A1**
(43) Date of publication of application: **05.03.2025**
(21) Application number: 23194920.7
(22) Date of filing: 01.09.2023
(51) Int. Cl.: B22F 10/20, B23K 9/04, B23K 10/02, B33Y 10/00, B33Y 70/00, C22C 1/04, C22C 14/00

(54) **TITANIUM-BASE ALLOY COMPOSITIONS**

(71) Applicant: Norsk Titanium AS, 3514 Hønefoss (NO)
(72) Inventor: BORLAUG MATHISEN, Martin, 3514 Hønefoss (NO)
(74) Representative: Onsagers AS

(57) **Abstract**

The present invention relates to titanium alloy compositions suited for manufacturing components by additive manufacturing, resulting in components that exhibit relatively small prior β-grain sizes. The titanium alloy compositions comprises: from 2 to 7 wt% Al, from 1.5 to 6 wt% Mo, from 0.25 to 1.5 wt% Bi, unavoidable impurities, and a remaining wt% Ti which makes the total content of constituents in the titanium alloy composition sum up to 100 wt%, wherein the weight percentages are based on the total mass of the titanium alloy composition.

## Description

### Field of the Invention

The present invention relates to titanium alloy compositions suited for manufacturing components by additive manufacturing, resulting in components that exhibit relatively small prior β-grain sizes.

### Discussion of the related aet

Structured metal parts made of titanium or titanium alloys conventionally have been made by casting, forging or machining from a billet. These techniques have several disadvantages, such as high material use of the expensive titanium metal and large lead times in the fabrication of the metal component. Casting, which often can be used for production of a potentially near-net-shape component, typically has a reduced material quality due to lack of control of solidification and cooling rates. Tooling costs and the inability to prepare components with complex shapes are additional disadvantages of the conventional methods.

Fully dense physical components can be made by additive manufacturing, a manufacturing technology also known as rapid prototyping, rapid manufacturing, free form fabrication and layered manufacturing. Additive manufacturing prepares near-net-shape products by consecutive layering of materials one layer at a time to yield the three-dimensional component. This is opposed to subtractive manufacturing, in which a billet or block of material is worked by removing material in order to produce the final product.

It is desirable in additive manufacturing to match the material properties achieved by conventional thermo-mechanical processing methods such as forging. In thermo-mechanical processing, the material properties are in most cases a result of the refined grain structures achieved by recrystallization induced by the plastic deformation of the mechanical forming steps. This mechanism is not available in a typical additive manufacturing process, where molten material is added in layers, solidifies and cools down without any mechanical forming. This typically results in coarse as-solidified grain structures. In many alloys the resulting structures will also be elongated with a high aspect ratio. This is due to the directional heat extraction provided by the relatively colder workpiece as superheated molten metal is added. Solidification initiates from the previously deposited layer(s) and propagates up into the deposited material as it cools down. The solidification structures will in many cases extend across several layers, up to several centimeters in size. These characteristics are typically detrimental to mechanical properties, giving rise to reduced and/or anisotropic strength, elongation and fatigue performance.

Prior techniques for improving as-deposited grain structure include, for example, utilization of a hybrid process where each deposited layer is plastically deformed to achieve a recrystallized grain structure has been applied to reduce distortion and improve mechanical properties (see U.S. Pat. Ap. Pub. No. US2015/0360289, Liou et al. (2015)). Such intermediate forming steps, however, give a reduced effective deposition rate (negatively impacting productivity), and can limit the freedom of fabrication in terms of the ability to form complex shapes. Other techniques include inter-layer laser peening and ultrasonic impact treatment, such as described in International Pat. Appl. WO 2013140147 A1 (Wescott et al. (2013)), inter-layer cold rolling, such as described in European Pat. App. Pub. EP2962788 A1 (Liou et al. (2016)), and forced cooling of the as-solidified layer during cooling of the solidified metal in preparation for laser or ultrasonic impact treatment to reduce thermal distortion and refine grain structures as a result of recrystallization (see U.S. Pat. App. Pub. No. US2015/0041025, Wescott et al. (2015)). Physically working the solidified surface of a work product has resulted in varying degrees of success, and the processes can be complex and expensive due to the need for special equipment. Further, for the methods that physically work the deposited layer, contaminations from tooling will be a concern since any contaminations can get enclosed between layers of the final product in an additive manufacturing process. Physically working the product also adds processing time, thereby reducing productivity.

Other techniques that have been used to refine metals to achieve grain refinements include transmission of high frequency vibrations to a body of molten material, such as through application of mechanical vibrations (e.g., see U.S. Pat. No. 3,363,668, Petit et al. (1968)), acoustic energy (U.S. Pat. App. Pub. No. 2014/0255620, Shuck et al. (2014)), or an oscillating electromagnetic field (International Pat. App. WO2015028065 A1, Jarvis et al. (2015)). In addition to potentially prohibitive costs and lack of practical methods of implementation, the effectiveness of the general principle of melt pool agitation is very limited on many of the relevant metal alloys. Specifically, it requires a zone of partially solidified material at the propagating solidification front to be able to disrupt that front through fragmentation. The nature of many alloys applicable to additive manufacturing, such as many of the titanium alloys, and particularly the major titanium alloy Ti-6A1-4V, is a narrow freezing range which makes it very resistant to fragmentation of the solidification front through the techniques that utilize a vibration mechanism, such as an acoustic, electromagnetic or a mechanical vibration mechanism.

US 2013/0174944 A1 discloses titanium alloys designed for additive manufacturing designed to achieve an equiaxed grain structure, comprising by weight about 3.0% to about 6.0% aluminum, 0% to about 1.5% tin, about 2.0% to about 4.0% vanadium, about 0.5% to about 4.5% molybdenum, about 1.0% to about 2.5% chromium, about 0.20% to about 0.55% iron, 0% to about 0.35% oxygen, 0% to about 0.007% boron, and 0% to about 0.60% other incidental elements and impurities.

US 2021/0238712 A1 discloses titanium alloys with 2-20 wt% of Fe, Ni and or Cu added to achieve equiaxed grain structure.

US 2004/0136859 discloses a titanium alloy containing 0.01-5 wt %, preferably 0.1-3 wt %, of bismuth, based on the weight of bismuth and the titanium alloy being suitable for making a dental casting or a medical implant by casting.

JPH 05279773 discloses adding 0.1 to 0.8 wt% O and 0.001 to 0.5 wt% of one or more of P, As, Sb, Bi, S, Se, Te, and B to titanium alloys of α-type, α+β-type and β-type, that the alloys have a uniform fine structure with improved strength at room temperature and high temperature.

In common for many alloy compositions is that they are less suitable for high energy-input, high deposition rate additive manufacturing processes due to insufficient level of grain refinement or excessive segregation of solute elements. There exists thus a need in this art for an economical method of performing metal additive manufacturing at an increased rate of metal deposition in an additive manufacturing system that yields metal products made of titanium having a finer solidification grain structure, particularly having more equiaxed prior-β grains formed during solidification, compared to what is achieved in traditional additive manufacturing processes.

### Objective of the Invention

The main objective of the invention is the provision of titanium alloys suited for being applied in direct energy deposition additive manufacturing of components having isotropic high-strength mechanical properties.

A further objective of the invention is the provision of an additive manufacturing method for producing components in titanium having isotropic high-strength mechanical properties.

### Summary of the Invention

The invention is based on a discovery, believed to be novel, of that aluminum and molybdenum based titanium alloys obtain a significant grain refinement effect of the as-solidified grain structure with an addition of bismuth, making the titanium alloys especially suited for use in additive manufacturing of components with high mechanical strength.

Thus, in a first aspect the invention relates to a titanium alloy, wherein the composition of the titanium alloy is
either:
a first alloy composition characterised by comprising:
   - from 2 to 7 wt% Al,
   - from 1.5 to 6 wt% Mo,
   - from 0.25 to 1.5 wt% Bi,
   - optionally from 0 to 1 wt% V, and
   - a remaining wt% Ti which makes the total content of constituents in the titanium alloy composition sum up to 100 wt%,
wherein the weight percentages are based on the total mass of the titanium alloy composition,
or:
a second alloy composition characterised by comprising:
   - from 2 to 7 wt% Al,
   - one or more of Mo and V in a total of from 1.5 to 6 wt%,
   - from 0.25 to 1.5 wt% Bi,
   - one or more elements selected from the group of beta eutectoid stabilizers; Fe, Cr, Co, Cu, Ni, Mn, W, B and Si, in a total amount of from 0.3 to 1.5 wt%, and
   - a remaining wt% Ti which makes the total content of constituents in the titanium alloy composition sum up to 100 wt%,
wherein the weight percentages are based on the total mass of the titanium alloy composition,
or:
a third alloy composition characterised by comprising:
   - from 2 to 7 wt% Al,
   - from 1.5 to 6 wt% V,
   - from 0.25 to 1.5 wt% Bi,
   - one or more - one or more elements selected from the group of beta eutectoid stabilizers; Fe, Cr, Co, Cu, Ni, Mn, W, B and Si, in a total amount of from 0.3 to 1.5 wt%, and
   - a remaining wt% Ti which makes the total content of constituents in the titanium alloy composition sum up to 100 wt%,
wherein the weight percentages are based on the total mass of the titanium alloy composition.

Alternatively, in a first aspect, the invention relates to a titanium alloy, wherein the titanium alloy is:
either:
a first alloy composition characterised by consisting of:
   - from 2 to 7 wt% Al,
   - from 1.5 to 6 wt% Mo,
   - from 0.25 to 1.5 wt% Bi,
   - optionally from 0 to 1 wt% V, and
   - the rest is Ti and unavoidable impurities,
wherein the weight percentages are based on the total mass of the titanium alloy composition,
or:
a second alloy composition characterised by consisting of:
   - from 2 to 7 wt% Al,
   - one or more of Mo and V in a total of from 1.5 to 6 wt%,
   - from 0.25 to 1.5 wt% Bi,
   - one or more - one or more elements selected from the group of beta eutectoid stabilizers; Fe, Cr, Co, Cu, Ni, Mn, W, B and Si, in a total amount of from 0.3 to 1.5 wt%, and
   - the rest is Ti and unavoidable impurities,
wherein the weight percentages are based on the total mass of the titanium alloy composition,
or:
a third alloy composition characterised by consisting of:
   - from 2 to 7 wt% Al,
   - from 1.5 to 6 wt% V,
   - from 0.25 to 1.5 wt% Bi,
   - one or more - one or more elements selected from the group of beta eutectoid stabilizers; Fe, Cr, Co, Cu, Ni, Mn, W, B and Si, in a total amount of from 0.3 to 1.5 wt%, and
   - the rest is Ti and unavoidable impurities,
wherein the weight percentages are based on the total mass of the titanium alloy composition.

The term "one or more of element A, element B, and element C" as used herein, is to be understood as encompassing alloys containing only one of these elements A, B, or C and any other possible combination of the specified elements. For example, in the case of "one or more of A, B, and C", the alloy may contain any of: A (alone), B (alone), C (alone), A+B, A+C, B+C, and A+B+C. Furthermore, the term "one or more of element A, element B, and element C in a total amount of from x to y wt%", as used herein means that whatever combination of elements A, B and C is being applied in the alloy, that the content of that combination of elements shall be in the range of from x to y wt% based on the total mass of the titanium alloy composition.

The term "remaining wt% Ti" as used herein means that the amount of titanium in the alloy composition is determined in accordance with the content of the other constituents in the composition to make the total content of constituents sum up to 100 wt%. I.e., the content of titanium in the composition fills the "available space" in the composition left by the other constituents. For example, if an alloy composition according to the invention contains 6 wt% Al, 3 wt% Mo, 1 wt% Bi, 1 wt% impurities, and 3 wt% of an optional alloying element, the content of Ti including unavoidable impurities is 86 wt% since the total content of other constituents adds up to 14 wt%.

Accordingly, exemplary embodiments are directed to refinement of solidification structures in additive manufacturing by providing a weldable titanium alloy wire made of an Al and Mo containing Ti alloy that includes small additions of the low surface tension metal Bi. The addition of surface active element, such as Bi in such titanium alloy for additive manufacturing, is shown empirically to promote grain nucleation, presumably due to reduction of liquid-solid interfacial energy which can lead to a reduced barrier for nuclei formation and growth, along with enhancement of surface tension driven melt pool flow.

In one embodiment, the content of aluminium in either the first, or the second, or the third alloy composition according to the first aspect of the invention may be from 3 to 6.75 wt%, preferably from 4 to 6.5 wt%, more preferably from 5 to 6.25 wt%, and most preferably from 5.9 to 6.1 wt% based on the total mass of the titanium alloy composition.

In one embodiment, the content of molybdenum in the first alloy composition of the first aspect of the invention may be from 1.75 to 5.5 wt%, preferably from 2 to 5 wt%, more preferably from 2.25 to 4 wt%, more preferably from 2.5 to 3.5 wt%, and most preferably from 2.9 to 3.1 wt%, and/or the total content of molybdenum and vanadium in the second alloy composition may be from 2 to 5.5 wt%, preferably from 2.5 to 5 wt%, more preferably from 3 to 4.5 wt%, more preferably from 3.25 to 4.0 wt%, and most preferably from 3.4 to 3.6 wt%, and wherein the weight percentages are based on the total mass of the titanium alloy composition.

In one embodiment, the content of bismuth in either the first, or the second, or the third alloy composition according to the first aspect of the invention may be from 0.3 to 1.4 wt%, preferably from 0.35 to 1.3 wt%, more preferably from 0.4 to 1.2 wt%, more preferably from 0.45 to 1.1 wt%, more preferably from 0.5 to 1 wt%, more preferably from 0.6 to 0.9 wt%, and most preferably from 0.7 to 0.8 wt% based on the total mass of the titanium alloy composition.

In one embodiment, the total content of one or more elements selected from the group of beta eutectoid stabilizers; Fe, Cr, Co, Cu, Ni, Mn, W, B, and Si in either the second or the third alloy composition according to the first aspect of the invention may be in the range from 0.4 to 1.4 wt%, preferably from 0.5 to 1.3 wt%, more preferably from 0.6 to 1.2 wt%, more preferably from 0.7 to 1.1 wt%, and most preferably from 0.8 to 1.0 wt%, based on the total mass of the titanium alloy composition. The combination of Bi and one or more of the above range extending elements is shown empirically to result in a substantial refinement of prior β-grain size.

In one embodiment, the content of oxygen in either the first, or the second, or the third alloy composition according to the first aspect of the invention may contain less than 0.5 wt%, preferably less than 0.4 wt%, more preferably less than 0.3 wt%, more preferably less than 0.2 wt%, and most preferably between 0.06 and 0.18 wt%, based on the total mass of the alloy composition.

In one particularly preferred embodiment, the titanium alloy composition comprises or consists of 6 wt% Al, 3 wt% Mo, 0,6 wt% Bi, and 0.6 wt% Fe, the rest is Ti and unavoidable impurities, wherein the weight percentages are based on the total mass of the titanium alloy composition.

In one embodiment, the first and/or second and/or third alloy composition according to the first aspect of the invention may further comprise a total amount of from 0.1 to 5.0 wt% Sn and/or from 0.1 to 6.0 wt% Zr, based on the total mass of the titanium alloy composition.

The term "unavoidable impurities" as used herein refers to any unintended constituent and/or element being present in the alloy compositions, typically originating from the upstream processing and/or the raw materials applied in manufacturing the titanium and/or the alloy constituents of the alloy composition.

The alloy compositions provided herein allow refinement of the solidification structures during metal additive manufacturing to achieve products with improved material quality, particularly having more equiaxed as-solidified grain structure. These refined grain structures can result in increased strength, fatigue resistance, ductility and isotropic properties of additive manufactured components.

Exemplary embodiments of the alloy composition according to the first aspect of the invention can provide grain refinement in metal articles of titanium produced by additive manufacturing without the need for modification of the manufacturing process. The resulting grain structure of the deposited material can have comparable aspect ratio and homogeneity approaching that of mechanically worked titanium alloys. Some embodiments can exhibit a significantly reduced average grain size compared to typical cast or additively manufactured materials. The reduced barrier for grain formation provided by the Bi-addition, optionally combined with one or more of the solidification range extending elements Fe, Cr, Co, Cu, Ni, Mn, W, B and Si, can result in solidification structure refinement by simply applying the alloy composition in an additive manufacturing process which involves melting and subsequent layered metal deposition of the alloy. In an especially preferred embodiment, the alloy composition according to the first aspect of the invention is provided in the form of a welding wire.

Exemplary alloy compositions in the form of a weldable wire can provide a practical way to achieve significant refinement of metal structure of the titanium alloy components made by metal additive manufacturing, resulting in grains that in most cases can be similar to or somewhat coarser than typical mechanically worked titanium metals, and can be of comparable aspect ratio and homogeneity.

Embodiments of the alloy composition can achieve solidification refinement without negatively impacting deposition productivity. The alloy compositions of the first aspect of the invention can be used with most melting tools. In embodiments, said alloy compositions can be used preferably with plasma arc torches and inert gas atmospheres due to evaporation and volatility associated with the low melting point additives in high intensity laser processes and electron beam processes performed in a vacuum. The alloy compositions of the first aspect of the invention can be used with any metal additive manufacturing process, including plasma and wire-based processes, and electron beam and laser systems, and combinations thereof. Exemplary embodiments in the form of a welding wire can be particularly suitable for high deposition rate processes where solidification grain structures can be very coarse.

Provided are feedstocks for metal additive manufacturing, where the feedstocks are a titanium alloy including the low surface tension element Bi, optionally in combination with one or more elements that increase solidification range. The feedstock can be in the form of a titanium alloy powder or a titanium alloy wire.

Thus, in a second aspect, the invention relates to a welding wire made of a titanium alloy composition according to the first aspect of the invention. In one embodiment, the welding wire may have a nominal diameter in the range from 0.5 to 10.0 mm, preferably from 0.7 to 5.0 mm, more preferably from 0.8 to 2.5 mm, more preferably from 0.9 to 2.0 mm, more preferably from 1.0 to 1.8 mm, and most preferably from 1.2 to 1.6 mm.

The welding wire can be prepared using any conventional method. One method can include production of a bar stock or billet. The bar stock or billet can be rolled to a diameter typically less than about 10 mm to 15 mm. The rolled bar stock or billet can be drawn to final size having a targeted diameter for use in the additive manufacturing process. Alternative methods of producing a titanium welding wire can involve production through a solid state processing. For example, the process can include powder compaction and sintering prior to hot working without intermediate melting of titanium sponge. The weldable titanium wire can be produced from titanium sponge by processing solely in the solid state without melting occurring to any of the constituents at any time during processing.

In a third aspect, the invention relates to a powder made of a titanium alloy composition according to the first aspect of the invention.

The titanium alloy powder can be produced using any know method. For example, the titanium alloy powder can be produced via gas atomization, water atomization, plasma atomization, centrifugal atomization, plasma rotation electrode process, or any combination thereof. Depending on the method selected, the resulting titanium alloy powders can have an irregular shape or can be spherical, or a combination thereof. The titanium alloy powder particles can have a smooth or rough surface. In one embodiment, the particles of the titanium alloy powder can have a nominal particle size distribution of from 15 µm to 200 µm, as determined by laser diffraction analysis according to standard ISO 13320:2020.

In a fourth aspect, the invention relates to a method for manufacturing a three-dimensional component made of a titanium alloy, characterised in that the method comprises forming the three-dimensional component by an additive manufacturing process applying a titanium alloy according to the first aspect of the invention.

In one embodiment, the additive manufacturing process may advantageously comprise:
- building the three-dimensional component by fusing together successive deposits of the titanium alloy onto a base material, by:
- using a melting tool to heat and melt a feedstock of the titanium alloy and depositing the molten feedstock onto a deposition area of the base material, and either:
   a) moving the base material relative to the position of the first melting tool in a predetermined pattern such that the successive deposits of molten feedstock solidifies and forms the three-dimensional component,
      or:
   b) moving the first melting tool relative to the base material in a predetermined pattern such that the successive deposits of molten feedstock solidifies and forms the three-dimensional component.

In one embodiment, the method according to the invention may advantageously further comprise using two melting tools, a first melting tool to preheat at least a portion of a surface of the base material; and a second melting tool to heat and melt a weldable wire according to the second aspect of the invention, such that molten titanium alloy material is deposited onto the preheated area of the base material forming a liquid molten pool. The base material can be moved relative to the position of the first and second heating devices in a predetermined pattern such that the successive deposits of molten titanium alloy material solidifies and forms the three-dimensional component.

In one embodiment, the feedstock may be a welding wire according to the second aspect of the invention, and the second melting tool may be a plasma transferred arc torch (PTA) applied to heat and melt the welding wire above the deposition area of the base material.

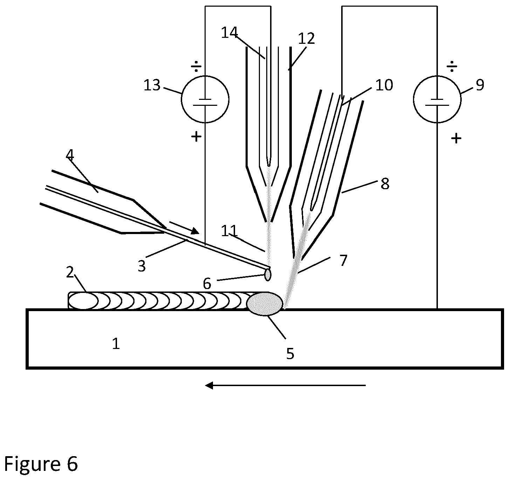

In one embodiment, both the first and second melting tools are a plasma transferred arc torch (PTA). An example embodiment applying two melting tools are drawn schematically in figure 6. The figure shows a holding substrate 1, e.g. made of a Ti-6Al-4V alloy, onto which a three-dimensional object is to be formed by solid freeform fabrication. The figure displays the initial part of the deposition process where a first welding stripe 2 of the titanium alloy is being shaped.

A wire 3 made of the titanium alloy according to first aspect of the invention is continuously being supplied by a wire feeder 4 which positions the wire 3 such that its distal end is located above the molten pool 5 at the deposition area on the holding substrate 1. The wire 3 is given a velocity indicated by the upper arrow on the Figure which corresponds to the heating and melting rate of the distal end such that droplets 6 of molten wire are continuously being supplied to the molten pool 5.

A first plasma transferred arc 7 is formed by the first melting tool (PTA-torch 8) which is electrically connected to a DC power source 9 such that the electrode 10 of the PTA-torch becomes the cathode and the holding substrate 1 the anode. The first plasma transferred arc 7 heats the deposition area and assists in forming the molten pool 5. The PTA-torch 8 may be a gas tungsten arc welding (GTAW) torch equipped with a magnetic arc deflector (not shown) to control the size and position of the arc 8.

A second plasma transferred arc 11 is formed by the second melting tool (PTA-torch 12) which is electrically connected to a DC power source 13 such that the electrode 14 of the PTA-torch 12 becomes the cathode and the feed wire 3 the anode. The plasma transferred arc 11 is continuous and directed to heat and melt the distal end of the wire 3. The effect of the DC power source 13 may advantageously be regulated to maintain a heating and melting rate in accordance with the feeding velocity of the wire 3 such that the formation of the droplets 6 are timed to maintain a continuous drip of molten wire into the molten pool 5.

Also provided are methods for minimizing columnar growth and methods for solidification refinement in in a three-dimensional titanium alloy component produced by additive manufacturing. The surface active element can reduce the liquid-solid interfacial energy and therefore reduce the barrier for grain nucleation and growth during solidification. The surface active element can enhance surface tension-driven flow in the melt pool that affects solidification by influencing thermal gradients in the melt and at the solid-liquid interface. The surface active element can promote fragmentation in the partially solidified mushy zone. The surface active element can contribute to increased constitutional undercooling due to extension of the solidification range to provide an increased growth restriction factor.

The methods also can contain a step of including in the weldable wire an element that promote additional constitutional undercooling by extending the alloy's freezing range. This can further increase the tendency for grain nucleation and refinement. It is important to limit such additions in order to avoid detrimental segregation and solidification flaws in the final product. The combination with Bi allows for significant grain refinement without such detrimental effects. The element that promotes constitutional undercooling can be selected from the group categorized as eutectoid beta-stabilizing solutes. The relevant elements of this group are consisting of Fe, Cr, Co, Cu, Ni, Mn, W, B and Si. The methods also can contain a step of including in the weldable wire an elements that promote alpha stabilization. An exemplary element that promotes alpha stabilization is Al. Elements in this group also contribute to increased strength due to solid-solution hardening. Another element that can be included to provide further solid solution strengthening is Si. The methods provided herein can yield a three-dimensional component having an average grain size reduced by a factor of at least 2 and preferably at least 5 compared to a grain size of a three-dimensional component prepared using a titanium alloy feedstock from alloy Ti-6A1-4V or other conventional weldable α-β Titanium alloys that does not include a surface active element in an additive manufacturing process.

Finally, in a fifth aspect, the invention may relate to the use of a titanium alloy according to the first aspect of the invention in an additive manufacturing process, the titanium alloy may in a further embodiment preferably be in the form of a welding wire according to the second aspect of the invention, or a powder according to the fourth aspect of the invention.

It is to be understood that both the foregoing general description and the following detailed description are exemplary and explanatory and are intended to provide further explanation of the invention as claimed.

Additional features will be set forth in the description which follows, and in part will be apparent from the description, or may be learned by practice of the invention. The objectives and other advantages of the exemplary embodiments will be realized and attained by the structure particularly pointed out in the written description and claims hereof as well as the appended drawings.

### Brief description of the drawings

The accompanying drawings and images, which are included to provide a further understanding of the invention and are incorporated in and constitute a part of this specification, illustrate embodiments of the invention and together with the description serve to explain the principles of the invention.

In the drawings:
FIG. 1A is an illustration of the cross-section of a wall deposit as layer upon layer is fused in conventional prior art additive manufacturing.
FIG. 1B is an illustration of the cross-section of a wall deposit as layer upon layer is fused in additive manufacturing using a weldable titanium alloy wire or titanium alloy powders containing surface active elements. The surface active elements can reduce surface tension and interfacial energy. The reduced surface tension can reduce the barrier towards grain nucleation and growth. This can result in solidification refinement. In exemplary embodiments, this can result in minimized columnar grain growth.
FIG. 2A is a macrograph of the cross-section of a columnar deposit of an additively manufactured Ti5,5Al-3Mo metallic component additionally containing 0.58 wt% Bi. The solidification grain size is reduced through the addition of Bi. Columnar grains are largely eliminated and more equiaxed grains are produced. The addition of the Bi resulted in solidification refinement. The deposit consists of approximately 7-8 deposited layers.
FIG. 2B is a macrograph of the cross-section of a wall deposit of an additively manufactured comparative Ti5,5Al-3Mo metallic component, without addition of Bi, to serve as a reference that exhibits the typical columnar macrostructures. The deposit consists of approximately 7-8 deposited layers.
FIG. 2C is a macrograph of the cross-section of a wall deposit of an additively manufactured comparative Ti5,5Al-3Mo metallic component containing 0.57 wt% Bi and additionally 0.73 wt% Fe. The deposit consists of approximately 4-5 deposited layers. The solidification grain size is reduced further due to the effect of Fe additions on the alloy freezing range and the associated tendency for constitutional undercooling which further promotes grain nucleation.
FIG. 3A is an image made up of stitched micrographs from the same cross-section as FIG. 2A. Here the solidification grain structure is outlined for most of the sample to clearly show prior β grain size. Each outlined grain was measured, and the mean grain size was 0.60 mm².
FIG. 3B is an image made up of stitched micrographs from the same cross-section as FIG. 2B. Here the solidification grain structure is outlined for most of the sample to clearly show prior β grain size. Each outlined grain was measured, and the mean grain size was 8.76 mm².
FIG. 3C is an image made up of stitched micrographs from the same cross-section as FIG. 2C. Here the solidification grain structure is outlined for most of the sample to clearly show prior β grain size. Each outlined grain was measured, and the mean grain size was 0.10 mm².
Fig. 4A is a macrograph of the cross-section of a wall deposit of an additively manufactured comparative titanium alloy metallic component with composition Ti-6A1-4V, additionally containing 0.67 wt% Bi. The solidification grain structure is outlined for most of the sample to clearly show grain size. The mean grain size was 0.91 mm².
Fig. 4B is a macrograph of the cross-section of a wall deposit of an additively manufactured comparative titanium alloy metallic component with the same base-composition of Ti-6A1-4V, containing instead 0.57 wt% Fe and no Bi. The solidification grain structure is outlined for most of the sample to clearly show grain size. The mean grain size was 2.49 mm².
Fig. 5 is column diagram summarizing the resulting mean grain size in a series of comparison tests with building a component in titanium alloys falling within and without the titanium alloy compositions of the invention.
Fig. 6 is a drawing schematically illustrating an embodiment the method according to the fourth aspect of the invention.

### Detailed description of the illustrated embodiments

Reference will now be made in detail to an embodiment of the present invention, example of which is illustrated in the accompanying drawings.

### A. Definitions

Unless defined otherwise, all technical and scientific terms used herein have the same meaning as is commonly understood by one of skill in the art to which the inventions belong. All patents, patent applications, published applications and publications, websites and other published materials referred to throughout the entire disclosure herein, unless noted otherwise, are incorporated by reference in their entirety. In the event that there are a plurality of definitions for terms herein, those in this section prevail.

As used herein, the singular forms "a," "an" and "the" include plural referents unless the context clearly dictates otherwise.

As used herein, ranges and amounts can be expressed as "about" a particular value or range. "About" also includes the exact amount. Hence "about 5 percent" means "about 5 percent" and also "5 percent." "About" means within typical experimental error for the application or purpose intended.

As used herein, "wt%" refers to weight percent, sometimes referred to as w/w, and is the percent of the total mass of the composition that is one component. Weight percent also can be expressed as 100 □ the weight fraction of a component in a composition. The sum of the wt% of all of the components in a composition equals 100.

As used herein, "optional" or "optionally" means that the subsequently described event or circumstance does or does not occur, and that the description includes instances where the event or circumstance occurs and instances where it does not. For example, an optional component in a system means that the component may be present or may not be present in the system.

As used herein, the terms "comprising", "including" and "containing" are synonymous, and are inclusive or open-ended. Each term indicates that additional, unrecited elements or method steps optionally can be included.

As used herein, "and/or," means "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein, a "combination" refers to any association between two items or among more than two items. The association can be spatial or refer to the use of the two or more items for a common purpose.

As used herein, "additive manufacturing" is also known as "additive fabrication" and "additive layer manufacturing" and refers to an additive process implementing the manufacturing, layer after layer, of a component. The component can be manufactured from a 3D model data. A titanium alloy source, such as wire or powder, can be used. An energy source (such as a plasma arc, laser, electron beam, or a combination thereof) can be used to melt the titanium alloy source.

As used herein, "additive manufacturing system" refers to the machine used for additive manufacturing.

As used herein, a "weldable wire" refers to wire of a titanium alloy material to be melted under the additive manufacturing conditions to form a designed component. The weldable wire can be a long, narrow wire-like structure. The weldable wire can be provided as a coil wrapped around a spool. The weldable wire can be a shorter, typically linear, structure. They can be provided as a welding rod or a welding electrode. The weldable wire can be in the form of a narrow elongated wire that can a nominal diameter in the range from 0.025 inches to 0.5 inches. It can have a length of at least 10 feet. For example, the welding wires can have a nominal diameter selected from 1/32, 1/16, ⅛, ¼, ⅜ and ½ inches, or a nominal diameter of from about 0.5 mm to 15 mm. Such wires can have lengths of at least 10 feet, at least 20 feet, at least 100 feet or at least 1000 feet. They can be spooled. In the case of larger diameter rods, with diameters of for example 5-15mm, the total length can be just a few inches, for example about 3 inches to 1 foot in length.

As used herein, a "Plasma Arc Welding torch" or "PAW torch" refers to a welding torch that can be used in plasma arc welding. The torch can be designed so that a gas can be heated to a high temperature to form plasma and can become electrically conductive. The plasma then can transfer an electric arc to a workpiece. The intense heat of the arc can melt metal and/or fuse two pieces of metal together. A PAW torch can include a nozzle for constricting the arc thereby increasing the power density of the arc. The plasma gas can be a noble gas. The plasma gas can be argon. The PAW torch can have an outer nozzle for providing a shielding gas. The shielding gas can be argon, helium or combinations thereof. A shielding gas can assist in reducing oxidation of the molten metal. PAW torches can include plasma transferred arc torches.

The term "plasma transferred arc torch" or "PTA torch" as used interchangeably herein refers to any device able to heat and excite a stream of inert gas to plasma by an electric arc discharge and then transfer the flow of plasma gas including the electric arc out through an orifice (such as a nozzle) to form a constricted plume that extends out of the orifice and transfers the intense heat of the arc to a target region. Plasma gas can be fed along an electrode and ionized and accelerated in the vicinity of a cathode. The arc can be directed towards the workpiece and is more stable than a free burning arc (such as in a TIG torch). Current typically goes up to 400 A, and voltage typically is in the range of about 25 - 35 V.

The term "base material" as used herein refers to the target material for the heat from a melting tool and on which a molten pool can be formed. The melting tool can be a PAW torch, a PTA torch, a laser device, an electron beam, or any combination thereof. A base material can be the holding substrate when depositing the first layer of titanium alloy material. When one or more layers of titanium alloy material have been deposited onto the holding substrate, the base material can be the upper layer of deposited titanium alloy material that is to have deposited a new layer of titanium alloy material.

As used herein, the term "workpiece" refers to a metal body made of a titanium alloy according to the invention being produced using solid free form fabrication.

The term "design model" or "computer assisted design model" or "CAD-model" as used interchangeably herein refers to any known or conceivable virtual vectorized layered three-dimensional representation of a component that is to be formed by an additive manufacturing process. The model may, for instance, be obtained by forming a virtual vectorized layered model of the three-dimensional component by first dividing the component into a set of virtual parallel layers and then dividing each of the parallel layers into a set of virtual quasi one-dimensional pieces that can be used by the controller of the additive manufacturing system to form the component via layers of metal deposited or fused according to the virtual parallel layers.

As used herein, "controller" refers to any logic circuitry and/or processing elements involved in communicating with and/or controlling one or more components of the additive manufacturing system, as well as related software or programs of additive manufacturing system components. The controller can include a computer and/or computer memory.

As used herein, a "computer" can include, but is not limited to, hardware and/or software, which can capture and/or store data, and any program that can be programed to communicate with and/or control one or more electronic devices or software controlling mechanical devices. The computer can include non-transitory computer-readable medium that can include, but is not limited to, CD-ROM, removable flash memory card, a hard disk drive, or a magnetic tape.

As used herein, "computer memory" refers to a configurable storage element capable of storing digital data or information that may be acquired by a computer.

As used herein, "inert atmosphere" refers to any known or conceivable gas or gaseous mixture containing less than 1% oxygen in order to reduce or prevent oxidation. The inert atmosphere can be non-reactive. The inert atmosphere can be non-oxidizing. The inert atmosphere can protect the component from exposure to oxygen or being subject to oxidation or other unwanted chemical action from constituents of the ambient atmosphere. Exemplary inert atmospheres include one or more noble gases. The inert atmosphere can include argon, helium, neon, xenon, or a combination thereof.

As used herein, "mushy zone" refers to a region adjacent to a liquid solid interface where a liquid phase and solid phase co-exist during solidification.

As used herein, "microstructure" refers to the internal crystallite structure of an alloy over distances from about 1 micron to about 1 mm, which can include the location, shape, size, and relative amounts of grains and metallurgical phases in the metal. It can include the three-dimensional arrangement of grains or metallurgical phases.

As used herein, "macrostructure" refers to the internal crystal grain structure, or multiple crystallographically related microstructural elements of an alloy over distances from about greater than 0.5 mm to about 100 mm, which can include the location, shape, size, and relative amounts of the elements that comprise the materials internal structure on a macroscopic scale. For Titanium alloys, the macrostructure that is typically present in cast, welded or additively manufactured material consists of what is called prior-beta grains. This refers to the discrete regions that can be identified by looking at patterns in the microstructure which reflect crystallographically related microstructures in addition to elongated continuous grains that are present at most boundaries between prior-beta grains.

As used herein, "surface active" refers to a chemical element that lowers the surface tension (or interfacial tension) between a gas and a liquid or between a liquid and a solid.

For any range described herein, unless clearly stated otherwise, that range includes all values therein and all subranges therein. For example, if a range of 1 to 10 is recited, that range includes 1 and 10 and all values between 1 and 10, such as, e.g., 1.1, 2.5, 3.333, 6.26, 7.9989, etc., and includes all subranges therebetween, such as for example, 1 to 3.5, 2.75 to 9.33, 1.5 to 9.999, etc.

### B. Metal feedstock composition

Provided herein are Ti alloy compositions that can exhibit refined solidification structures when used to fabricate a component using a melting- and fusion based additive manufacturing process. The Ti alloy feedstock composition can be in the form of a powder, wire, rod, ribbon, or a combination thereof. The Ti alloy feedstock composition can be a weldable wire. The addition of one or a combination of a surface active elements can reduce the interfacial energy barrier for nucleation during solidification of the as-deposited Ti alloy material. In one embodiment, the Ti alloy composition can include a surface active element Bi in combination with one or multiple elements selected from the group of beta eutectoid stabilizers that will increase solidification range, picked from the list: Fe, Cr, Co, Cu, Ni, Mn, W, B, and Si. An exemplary composition includes titanium or a titanium base alloy in combination with about 0.05 wt% to about 1.5 wt% Bi and 0,3 to 1.5 wt% Fe.

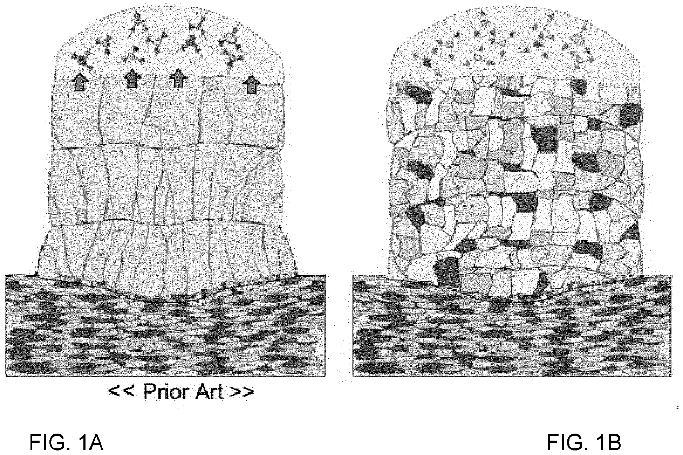

Titanium melt has a high surface tension. This high surface tension can act as a barrier for nucleating grains. This can result in strong preference for epitaxial and columnar solidification, as the interfacial energy barrier is omitted when solidification proceeds from existing grains. This is schematically illustrated in FIG. 1A. The schematic illustrates typical epitaxial growth that is exhibited by many conventional alloys when applied in additive manufacturing. It is a result of the preference for continued solidification to build upon the partially re-melted grains in the previous layer rather than forming new nuclei separate from the propagating solidification front. The nucleation resistance is related to the surface energy associated with forming new liquid-solid interfaces in the melt pool.

In embodiments, it has been discovered that minor additions of Bi to a Titanium-alloy breaks up the characteristic epitaxial and columnar grain growth when multiple layers are fused. This can promote grain nucleation in the melt during solidification (homogeneous nucleation). Addition of Bi can result in solidification refinement and can reduce columnar grain growth. This is illustrated in FIG. 1B.

It also has been discovered, in some embodiments, that by reducing surface tension and including elements that increase solidification range, combining the addition of Bi with minor additions of one or more elements selected from the group of beta eutectoid stabilizers; Fe, Cr, Co, Cu, Ni, Mn, W, B, and Si, substantially more significant solidification refinement can be achieved. For example, addition of as little as 0.58 wt% Bi to a metal composition containing Ti, Al, V and Mo reduced average grain size in the deposited metal when melted during an additive manufacturing process by a factor greater than 10.

Without wishing to be limited to any particular theory, solidification refinement is believed to occur in the presence of Bi because this element can reduce the liquid-solid interfacial energy and therefore reduce the barrier for grain nucleation and growth during solidification. In this proposed mechanism Bi acts as a surface active element. In embodiments, Bi can enhance surface tension-driven flow in the melt pool that affects solidification by influencing thermal gradients in the melt and at the solid-liquid interface. The Bi can potentially contribute to refinement through fragmentation in the partially solidified mushy zone.

In embodiments, the Bi can increase the tendency towards constitutional undercooling due to extension of the solidification range but is expected to contribute less through this mechanism compared to elements like Fe, Ni or Cu based on solute partitioning exhibited in established binary phase diagrams. The constitutional undercooling of a composition can be induced and increased by specifically including other elements that increase solidification range and provide an increased grain growth restriction in combination with one or more surface active elements. The presence of these other elements that increase solidification range can lead to a greater proportion of the solid clusters to overcome the nucleation barrier. Partitioning of elements can occur during solidification, which can increase or decrease the amount of the particular element in the liquid adjacent to the solid. A build-up of solutes at the solid-liquid interface can induce constitutional undercooling and contribute to nucleation at multiple sites rather than continued columnar grain growth. The degree of partitioning can be approximately proportional to grain growth restriction. Examples of elements that increase solidification range and provide an increased grain growth restriction are Fe, Ni and Cu. Particular care has to be taken with such addition to avoid too severe segregation, which can lead to material defects. It is therefore preferred to not rely entirely on this mechanism to achieve refinement, as this requires larger additions, typically above 1,5 wt%. The combination with surface active addition of Bi to increase potency of such solutes as Fe, Ni and Cu is therefore beneficial.

The addition of a surface active element, such as Bi, combined with one or more elements selected from the group of beta eutectoid stabilizers; Fe, Cr, Co, Cu, Ni, Mn, W, B, and Si, can result in a metal wire feedstock that when melted in an additive manufacturing process can result in refinement of solidification structures that substantially obviates one or more of the problems due to limitations and disadvantages of additive manufacturing using conventional alloys. In embodiments, the products yielded can have more equiaxed as-solidified grain structure. Manufactured products having these refined grain structures can demonstrate increased strength, fatigue resistance, ductility, or a combination thereof. Exemplary metal compositions containing Bi in combination with one or more elements selected from the group of beta eutectoid stabilizers; Fe, Cr, Co, Cu, Ni, Mn, W, B, and Si can result in metal layers deposited during an additive manufacturing process with a grain structure having a comparable aspect ratio and homogeneity to that typically present in mechanically worked metals and a significantly reduced average grain size compared to typical cast or additively manufactured materials.

Exemplary metal compositions containing Bi in combination with one or more elements selected from the group of beta eutectoid stabilizers; Fe, Cr, Co, Cu, Ni, Mn, W, B, and Si can be provided in the form of a weldable wire.

When used in an additive manufacturing process, exemplary metal compositions can yield deposited metal layers that can include an alpha-beta titanium alloy that exhibits substantially refined solidification structure primarily due to the addition of Bi. The total amount of Bi that can be present in the titanium alloy composition can be from 0.3 to 1.4 wt%, preferably from 0.35 to 1.3 wt%, more preferably from 0.4 to 1.2 wt%, more preferably from 0.45 to 1.1 wt%, more preferably from 0.5 to 1 wt%, more preferably from 0.6 to 0.9 wt%, and most preferably from 0.7 to 0.8 wt%.

In addition to Bi, embodiments of the titanium alloy compositions can include one or more elements that are known to increase the solidification range, generally belonging to the group eutectoid beta-stabilizing elements, chosen from the list Fe, Cr, Co, Cu, Ni, Mn, W, B and Si. The total amount of the one or a combination of two or more beta-stabilizing elements that can be present in a titanium alloy composition can be an amount of from 0.4 to 1.4 wt%, preferably from 0.5 to 1.3 wt%, more preferably from 0.6 to 1.2 wt%, more preferably from 0.7 to 1.1 wt%, and most preferably from 0.8 to 1.0 wt%, based on the total weight of the titanium alloy composition.

A beta-stabilizing element belonging to the group isomorphous beta-stabilizing elements can stabilize the β-phase of titanium without significant increase in solidification range and allows the titanium or titanium alloy to maintain some of the beta phase in the final product. One or a combination of isomorphous beta-stabilizing elements can be used, picked from the list V, Mo, Nb and Ta. The total amount of the one or a combination of two or more beta-stabilizing elements that can be present in a titanium alloy composition can be an amount of from 1.75 to 5.5 wt%, preferably from 2 to 5 wt%, more preferably from 2.25 to 4 wt%, more preferably from 2.5 to 3.5 wt%, and most preferably from 2.9 to 3.1 wt% based on the total weight of the titanium alloy composition.

The titanium alloy composition can include Al as an alpha-stabilizer. The total amount of A1 that can be present in the titanium alloy composition can be from 3 to 6.75 wt%, preferably from 4 to 6.5 wt%, more preferably from 5 to 6.25 wt%, and most preferably from 5.9 to 6.1 wt% based on the total weight of the titanium alloy composition.

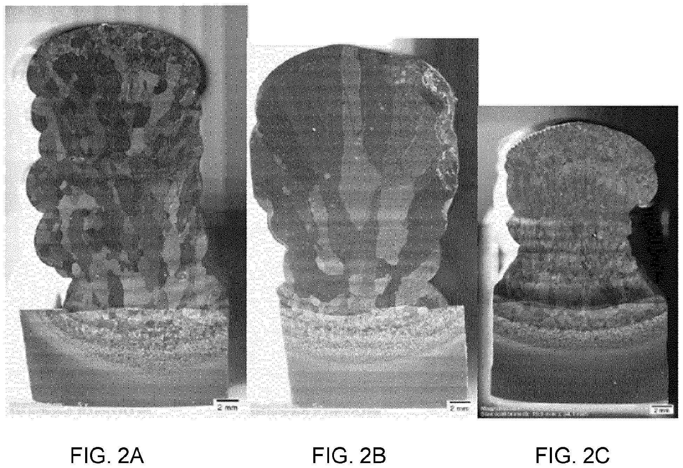

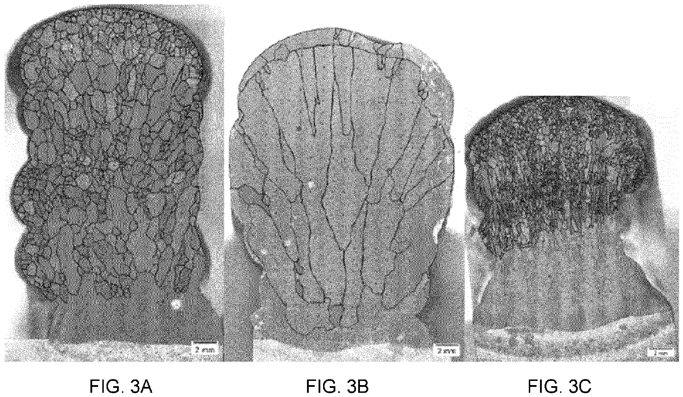

In embodiments, the addition of Bi to Ti or a Ti alloy has been found to effectively inhibit columnar solidification. For example, in an embodiment where Bi was added to a Ti alloy, columnar solidification was inhibited, transitioning from a primarily columnar morphology to a predominately equiaxed morphology. This is illustrated in FIG. 1B, and shown in FIGS. 2B,3B and 4B. Columnar grains are largely eliminated in compositions containing Bi in a range from 0.5-1.0 wt%. In some embodiments, the effect of Bi can be more pronounced when Fe is added, as illustrated in FIG. 2C and FIG. 3C. In some embodiments, extending solidification range by addition of Fe can yield further solidification refinement.

Exemplary titanium alloy compositions can be used in additive manufactured processes to produce products having potential for high strength, improved fatigue properties, isotropic material behavior, or a combination thereof, due to largely eliminating the presence of coarse columnar solidification structures and reducing the average prior beta-grain size by a factor of 10 or more compared to that achieved in titanium alloys that do not include these alloying additions. The exemplary titanium alloy compositions can be used to prepare a titanium alloy feed stock. The titanium alloy feedstock can be used in any additive manufacturing process that uses a titanium alloy feedstock. The titanium alloy feedstock can be in the form of a titanium alloy wire, titanium alloy ribbon, titanium alloy rod, titanium alloy powder or a combination thereof. The heat source of an additive manufacturing process can be used to melt the feedstock. The heat source can be a plasma arc, a laser beam, an electron beam, or any combination thereof.

Exemplary titanium alloy compositions when used in an additive manufacturing process can yield components that can exhibit higher strength, improved fatigue properties and isotropic material behavior due to largely eliminating the presence of coarse columnar solidification structures that typically are produced in additive manufacturing processes. In some embodiments, average prior beta-grain size can be reduced by a factor of 10 or more compared to conventional alloy compositions.

Additional benefits of exemplary embodiments can include reduced tendency towards defects in additive manufacturing that are associated with high melt pool surface tension. This includes the "balling" phenomenon seen in powder bed selective laser sintering and similar processes. In addition, a reduction in melt pool surface tension can be beneficial for bead shape, wetting and fusion in any additive manufacturing process.

For some applications, the Bi-addition can be combined with elements that can increase solidification range and solute partitioning. Examples include Fe, Ni and Cu, alone or in any combination. For example, when Fe is included, the solid phase cannot dissolve as much Fe as the liquid from which the Fe originates. The Fe will therefore be displaced into the liquid ahead of the solidification front. This Fe enrichment can lead to a reduction in solidification temperature for the liquid adjacent to the solidification front. Solidification can therefore not proceed until this portion of liquid has cooled down further. Meanwhile, there is liquid further away from the solidification front that is not enriched with Fe. As the temperature drops, these regions can start solidifying, giving rise to multiple solidification zones and consequent refinement of structure. Addition of Fe alone does not effectively inhibit columnar structure formation unless added in greater amounts of about 2 - 3 wt% and above which can give rise to potential compositional segregation problems. It is therefore preferable to combine such additions with the surface nucleation promoting effect of Bi to increase the potency of smaller solute amounts.

Other materials can be included in the titanium alloy compositions provided herein. The titanium alloy compositions provided herein can include one or more inoculants. The inoculants can provide nucleation sites for grains to develop. Examples of inoculants that can be included are TiB or TiB₂, typically in an amount of from 0.05 to 0.5 wt%, and/or Y₂O₃ typically in an amount of from 0.02 to 0.2 wt%, based on the total mass of the alloy composition. It is believed that in most conditions, TiB₂ is likely to be dissolved in the titanium alloy melt pool and not contribute as an inoculant but rather through its effect on solute partitioning and solidification range (similar to Fe, Ni and Cu).

Exemplary titanium alloy compositions can contain an amount of oxygen in the range of from about 0.01 wt% to about 0.3 wt%, based on the total weight of the titanium alloy composition. The titanium alloy composition can contain an amount of oxygen in the range of from about 0.05 wt% to about 0.3 wt%, based on the total weight of the titanium alloy composition.

Exemplary titanium alloy compositions can be provided as a weldable wire made by any conventional titanium alloy wire production process, including melting and ingot casting followed by a series of forming steps including for example billet forging, rolling and wire drawing.

### C. Additive manufacturing methods

Also provided are methods of additive manufacturing using the titanium alloy composition according to the first aspect of the invention as a feedstock. Additive manufacturing processes are known in the art. For example, see e.g. U.S. Pat. Nos. 5,745,834 (Bampton et al., 1998); 6,143,378 (Harwell et al., 2000); 7,326,377 (Adams, 2008); 8,994,592 (Scott et al., 2015); 9,064,671 (Ljungblad et al., 2015); 9,174,300 (Stecker et al., 2015); 9,175,568 (Ryan et al., 2015); 9,352,421 (Illston, 2016); 9,399,264 (Stecker, 2016); 9,481,931 (Stempfer, 2016); 9,522,426 (Das et al., 2016); 9,713,844 (Ackelid, 2017); 9,776,282 (Subramanian et al., 2017); and U.S. Pat. Appl. Pub. US2016/0318130 (Stempfer et al.).

Exemplary embodiments provide a method of making an additively manufactured metal component, the method can include (a) providing a metal feedstock that includes the above described titanium alloy compositions of the first aspect of the invention; (b) exposing at least a portion of the metal feedstock to an energy source for melting at least a portion of the metal feedstock to form molten metal; (c) depositing the molten metal on a substrate from a first start position to a first stop position to form a melt layer corresponding to the first virtual vectorized layered model of the component; (d) at least partially solidifying the melt layer, thereby generating a first metal layer of the additively manufactured metal component; (e) repositioning the substrate or the energy source or both to a start position of the next layer of virtual vectorized layered model of the component; and repeating steps (b) through (e) a plurality of times to generate a plurality of solid layers by sequentially solidifying a plurality of melt layers in an additive-manufacturing build direction. In any additive manufacturing techniques used, post-production processes such as heat treatment, light machining, surface finishing, or other finishing operations can be performed. In embodiments, one or more additive manufactured parts can be joined together to produce a final component.

Typical process conditions of additive manufacturing usually result in directional solidification and growth of columnar crystals due to the presence of steep thermal gradients, but this can be dependent on the alloy utilized. For example, for Ti-6Al-4V alloy, solidification is directional and epitaxial with spatial and crystallographic orientation of β-grains dictated by process characteristics that include a steep thermal gradient from heat source/melt pool to workpiece. Crystallography and morphology of α-β microstructures in Ti-6A1-4V alloy upon allotropic transformation are directly affected by the prior β-grain structure through orientation relationships, grain boundary nucleation and alignment caused by difference in interfacial energy, diffusion rates and thermal conductivity between different crystallographic directions in the lattice. This macro-micro interaction can lead to long ranging limitations of crystallographic and morphological diversity within prior β-grains, and thus pronounced differences in strain response across β-grain boundaries.

In the methods provided herein, the titanium alloy compositions containing the described alloying elements can be used as the metallic material or metal feedstock for building the component. The metal composition can result in a workpiece in which columnar grains are reduced. The metal composition can result in a workpiece that can contain a grain structure that is approximately equiaxed. The metal composition can result in a workpiece exhibiting a refined solidification structure. The presence of Bi and especially Bi in combination with Fe or other Beta-eutectoid element can result in increased crystallographic diversity in the workpiece.

In the methods provided herein, the component can be made by melting a titanium alloy feedstock that contains the described alloy elements into a layer of deposited metallic material onto a base material and fusing together successive deposits of metallic material. The methods can include using a heating device to heat and melt a portion of a metal feedstock that contains Bi such that molten metallic material is formed and is deposited onto a targeted area of the base material. The titanium alloy feedstock can be provided in the form of a weldable wire or a powder or a combination thereof. In some methods, two heating devices can be used. A first heating device can be used to preheat at least a portion of the surface of the base material, e.g., at the position at which the metallic material is to be deposited. A second heating device can be used to heat and melt the weldable wire containing Bi such that molten metallic material from the melted weldable wire is deposited onto the preheated area of the base material. Each heating device can be separately controlled. Each heating device can be modulated to produce a separate temperature effect.

The heating device(s) can include any device capable of providing sufficient energy to the weldable wire to melt the weldable wire into molten metallic material. In the methods provided herein, the heating device(s) can include a torch (PAW, PTA, GMAW or MIG-type), an electron beam device, a laser device or any combination thereof. In methods that use two heating devices, the heating devices can be the same, or they can differ from each other. For example, a first torch can be used to pre-heat a target deposition area on the base material to form a preheated area. A second torch can be used to heat and melt the weldable wire. This can result in drops of molten metal falling into the preheated area of the target deposition area. Alternatively, a laser device can be used to pre-heat a target deposition area on the base material to form a preheated area, and a torch can be used to heat and melt a consumable electrode, resulting in drops of molten metal that fall into the preheated area of the target deposition area. In some methods, a torch can be used to pre-heat a target deposition area on the base material to form a preheated area, and a laser device can be used to heat and melt the weldable wire, resulting in drops of molten metal that fall into the preheated area of the target deposition area. In some methods, the first heating device can be a laser and the second heating device can be an electron beam. In some methods, the first heating device can be an electron beam device, and the second heating device can be a laser. In some methods, the first heating device can be a torch and the second heating device can be an electron beam. In some methods, the first heating device can be an electron beam device, and the second heating device can be a torch.

In embodiments, the methods provided herein can allow refinement of solidification structures in titanium alloy workpieces made by additive manufacturing processes. The methods can eliminate or significantly reduce the coarse columnar structures typically produced by conventional additive manufacturing methods and materials. Elimination of these coarse columnar structures can result in a manufactured product that can exhibit higher strength, ductility, fatigue resistance, or a combination thereof than achieved in conventional additive manufacturing processes.

### D. Examples

The following examples are included for illustrative purposes only and are not intended to limit the scope of the embodiments provided herein.

### Example 1

Cylindrical bolts with a diameter of 25 mm, a total mass per bolt of 600g and various chemical compositions were made by mixing crushed titanium sponge having a particle size distribution up to 0.5 mm. Crushed sponge was sieved through a 500 micron screen and mixed with 5.5 wt% Al, 0.26 wt% V, 3.18 wt% Mo and 0.58 wt% Bi each with an average particle size from 50 to 250 µm. The mixture was blended in a mixer until a substantially homogeneous composition was achieved. Approximately two hours is a typical mixing time.

The bolts were then made by compacting an amount of the powder, approximately 600g per bolt, and subjecting the powder to a gradual increase in pressure. This resulted in a bolt with a density in the range from 92 to 96% of maximum theoretical density.

The bolts were sintered at 1250 °C for 8 hours in an inert atmosphere. The compacted and sintered bolts with a diameter of about 25 mm were subject to several rolling steps to form a 14 mm diameter rod. Each rolling step was performed by stress relieving the extruded rod by heating it to a temperature of 600 °C with 15 min time at temperature, and then passing through a rolling step which decreased the diameter a certain percentage. This was repeated until the desired diameter was achieved. For the purpose of testing different chemical compositions and their effect on grain refinement, the rods were turned down to 12 mm diameter to remove surface oxide, then used directly as feedstock in a plasma and wire-based additive manufacturing system. Production of welding wire could be achieved by further reduction and wire drawing steps.

The rolled rod was used in an additive manufacturing process using a plasma arc welding torch and stepwise feeding of the rod to melt and deposit droplets in a layered fashion. Columnar deposits with a diameter of approximately 15mm and height of up to 30 mm were produced. Between 6 and 10 layers where deposited, with one minute waiting time between each layer in order to mimic the typical process conditions of an additive manufacturing process. The previous layer was partially re-melted by the arc prior to deposition of the next layer. The welding current utilized on the transferred plasma arc was 150 A.

The solid form test object was sectioned for metallographic inspection. A macrograph is shown in FIG. 2A. An overview image consisting of stitched micrographs with grains outlined is shown in FIG. 3A. As can be seen, the composition containing Bi resulted in a solid form test object in which columnar grains are minimized. The presence of Bi inhibited columnar solidification. The grain structure in the test object is approximately equiaxed and exhibits a refined structure. The mean grain size was measured in FIG.3A to 0.60 mm².

### Comparative Example 1

To confirm that the minimization or elimination of columnar solidification can be attributed to addition of Bi, a comparative alloyed rod without Bi was prepared. The rod was made as described above in Example 1 by mixing crushed titanium sponge having a particle size distribution up to 0.5 mm with 5.41 wt% Al, 0.25 wt% V, 3.01 wt% Mo, each with an average particle size fraction from 50 to 250 µm.

The solid form test object was sectioned for metallographic inspection. A macrograph is shown in FIG. 2B. An overview image consisting of stitched micrographs with grains outlined is shown in FIG. 3B. As can be seen, the composition that did not include Bi resulted in a solid form test object in which columnar grains are prominent. Columnar grain growth is visible across several deposited layers and the grain structure is coarse. The mean grain size was measured in FIG.3B to 8.76 mm². This is approximately 15 times greater than the equivalent composition with Bi added.

### Example 2

The effect of Bi addition in combination with small Fe additions for increased solidification range was also tested. An alloyed rod containing Bi was prepared according to the procedures outlined in Example 1, but the rod for this example included Fe in addition to Bi. The composition was 89.44 wt% Ti, 6.00 wt% Al, 0.24 wt% V, 3.03 wt% Mo, 0.73 wt% Fe, 0.57 wt% Bi. A macrograph is shown in FIG. 2C. An overview image consisting of stitched micrographs with grains outlined is shown in FIG. 3C. As can be seen, the composition resulted in a solid form test object in which columnar grains are largely eliminated, and the solid form exhibited a refined solidification structure. The grain structure is approximately equiaxed. Fe has an increased solidification range which can induce constitutional undercooling and contribute to refinement in the presence of Bi. The mean grain size was measured in FIG.3C to 0.10 mm².

### Example 3

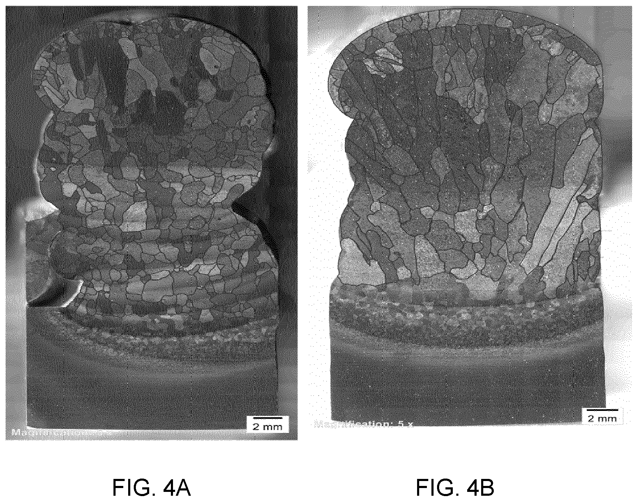

To test the effect of Bi addition on a base alloy composition of Ti-6A1-4V, an alloyed rod was prepared according to the procedures outlined in Example 1, but with the following composition: 89.25 wt% Ti, 6.04 wt% Al, 4.03 wt% V, 0.67 wt% Bi. A macrograph is shown in FIG. 4A. As can be seen, an approximately equivalent addition of Bi (larger in wt% but smaller in atom%) to a Ti-6A1-4V alloy contributed to largely eliminating columnar solidification structures. The mean grain size was measured in FIG. 4A to 0.91 mm². Comparing the result to the base alloy with Mo instead of V from example 1, it appears that the Bi addition is a more potent grain refiner in the case where Mo is present.

### Comparative Example 3

To demonstrate the relative effects on minimization or elimination of columnar solidification of Fe addition as opposed to Bi addition, and to test the effect of Fe addition alone on a base alloy composition of Ti-6A1-4V, an alloyed rod was prepared according to the procedures outlined in Example 1, but with the following composition: 89.40 wt% Ti, 6.02 wt% Al, 4.01 wt% V, 0.57 wt% Fe. This constitutes a larger Fe addition than what is present in conventional Ti-6A1-4V which can have up to 0.25 wt% Fe. A macrograph is shown in FIG. 4B. As can be seen, addition of Fe alone to a Ti-6A1-4V alloy did not effectively inhibit columnar solidification structures. The mean grain size was measured in FIG. 4B to 2.49 mm².

### Example 4

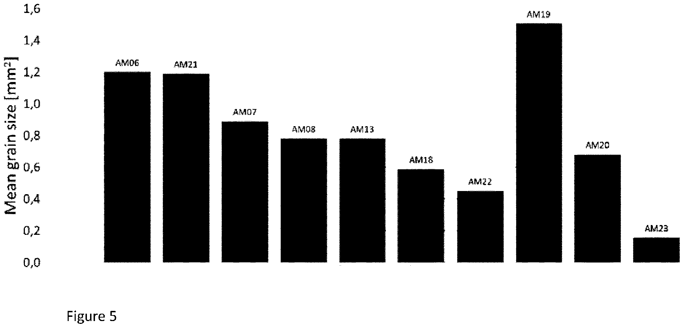

FIG. 5 is a bar graph illustrating mean grain size by area from a series of ten comparison tests with building objects in different titanium alloys. All objects were manufactured according to the procedures outlined in Example 1, but with number of layers deposited limited to 5 or 6 across all samples.

The ten samples of titanium alloys had the elemental composition as given in Table 1.

Grain size measurement was performed by manually drawing, in a computer application, lines onto the macrograph at prior-beta grain boundaries to form polygons representing each individual grain. The software can then calculate mean grain area based on image magnification and the size of polygons drawn onto the image.

**Table 1 Elemental composition of Ti-alloys applied in a comparison test**

| | Alloy element [wt%] | | | | | |
|---|---|---|---|---|---|---|
| Sample | Al | Bi | Fe | Mo | V | Y₂O₃ |
| AM06 | 6 | - | - | - | 4 | - |
| AM21 | 6 | - | 0.6 | - | 4 | - |
| AM07 | 6 | 0.6 | - | - | 4 | - |
| AM08 | 6 | 1.1 | - | - | 4 | - |
| AM13 | 6 | - | - | - | 4 | 0.06 |
| AM18 | 6 | 0.6 | - | - | 4 | 0.06 |
| AM22 | 6 | 0.6 | 0.6 | - | 4 | - |
| AM19 | 6 | - | - | 3 | - | - |
| AM20 | 6 | 0.6 | - | 3 | - | - |
| AM23 | 6 | 0.6 | 0.6 | 3 | - | - |

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

## Claims

1. A titanium alloy, wherein the titanium alloy is
either:
a first alloy composition **characterised by** comprising:
- from 2 to 7 wt% Al,
- from 1.5 to 6 wt% Mo,
- from 0.25 to 1.5 wt% Bi,
- optionally from 0 to 1 wt% V, and
- a remaining wt% Ti which makes the total content of constituents in the titanium alloy composition sum up to 100 wt%,
wherein the weight percentages are based on the total mass of the titanium alloy composition,
or:
a second alloy composition **characterised by** comprising:
- from 2 to 7 wt% Al,
- one or more of Mo and V in a total amount of from 1.5 to 6 wt%,
- from 0.25 to 1.5 wt% Bi,
- one or more elements selected from the group of beta eutectoid stabilizers; Fe, Cr, Co, Cu, Ni, Mn, W, B and Si, in a total amount of from 0.3 to 1.5 wt%, and
- a remaining wt% Ti which makes the total content of constituents in the titanium alloy composition sum up to 100 wt%,
wherein the weight percentages are based on the total mass of the titanium alloy composition,
or:
a third alloy composition **characterised by** comprising:
- from 2 to 7 wt% Al,
- from 1.5 to 6 wt% V,
- from 0.25 to 1.5 wt% Bi,
- one or more elements selected from the group of beta eutectoid stabilizers; Fe, Cr, Co, Cu, Ni, Mn, W, B and Si, in a total amount of from 0.3 to 1.5 wt%, and
- a remaining wt% Ti which makes the total content of constituents in the titanium alloy composition sum up to 100 wt%,
wherein the weight percentages are based on the total mass of the titanium alloy composition.

2. A titanium alloy, wherein the titanium alloy is:
either:
a first alloy composition **characterised by** consisting of:
- from 2 to 7 wt% Al,
- from 1.5 to 6 wt% Mo,
- from 0.25 to 1.5 wt% Bi,
- optionally from 0 to 1 wt% V, and
- the rest is Ti and unavoidable impurities,
wherein the weight percentages are based on the total mass of the titanium alloy composition,
or:
a second alloy composition **characterised by** consisting of:
- from 2 to 7 wt% Al,
- one or more of Mo and V in a total amount of from 1.5 to 6 wt%,
- from 0.25 to 1.5 wt% Bi,
- one or more elements selected from the group of beta eutectoid stabilizers; Fe, Cr, Co, Cu, Ni, Mn, W, B and Si, in a total amount of from 0.3 to 1.5 wt%, and
- the rest is Ti and unavoidable impurities,
wherein the weight percentages are based on the total mass of the titanium alloy composition,
or:
a third alloy composition **characterised by** consisting of:
- from 2 to 7 wt% Al,
- from 1.5 to 6 wt% V,
- from 0.25 to 1.5 wt% Bi,
- one or more elements selected from the group of beta eutectoid stabilizers; Fe, Cr, Co, Cu, Ni, Mn, W, B and Si, in a total amount of from 0.3 to 1.5 wt%, and
- the rest is Ti and unavoidable impurities,
wherein the weight percentages are based on the total mass of the titanium alloy composition.

3. The titanium alloy according to claim 1 or 2, wherein the total content in either the second or the third alloy composition of one or more elements selected from the group of beta eutectoid stabilizers; Fe, Cr, Co, Cu, Ni, Mn, W, B and Si, in a total amount of from 0.4 to 1.4 wt%, preferably from 0.5 to 1.3 wt%, more preferably from 0.6 to 1.2 wt%, more preferably from 0.7 to 1.1 wt%, and most preferably from 0.8 to 1.0 wt%, and wherein the weight percentages are based on the total mass of the titanium alloy composition.

4. The titanium alloy according to any preceding claim, wherein the content of aluminium in either the first, or the second, or the third alloy composition is in the range from 3 to 6.75 wt%, preferably from 4 to 6.5 wt%, more preferably from 5 to 6.25 wt%, and most preferably from 5.9 to 6.1 wt%, and wherein the weight percentages are based on the total mass of the titanium alloy composition.

5. The titanium alloy according to any preceding claim, wherein
- the content of molybdenum in the first alloy composition is in the range from 1.75 to 5.5 wt%, preferably from 2 to 5 wt%, more preferably from 2.25 to 4 wt%, more preferably from 2.5 to 3.5 wt%, and most preferably from 2.9 to 3.1 wt%, and/or
- the total content of molybdenum and vanadium in the second alloy composition is in the range from 2 to 5.5 wt%, preferably from 2.5 to 5 wt%, more preferably from 3 to 4.5 wt%, more preferably from 3.25 to 4.0 wt%, and most preferably from 3.4 to 3.6 wt%, and wherein the weight percentages are based on the total mass of the titanium alloy composition.

6. The titanium alloy according to any preceding claim, wherein the content of bismuth in either the first, or the second, or the third alloy composition is from 0.3 to 1.4 wt%, preferably from 0.35 to 1.3 wt%, more preferably from 0.4 to 1.2 wt%, more preferably from 0.45 to 1.1 wt%, more preferably from 0.5 to 1 wt%, more preferably from 0.6 to 0.9 wt%, and most preferably from 0.7 to 0.8 wt%, and wherein the weight percentages are based on the total mass of the titanium alloy composition.

7. The titanium alloy according to any of claims 1 and 3 to 6, wherein either the first, or the second, or the third alloy composition further comprises less than 0.5 wt% O, preferably less than 0.4 wt% O, more preferably less than 0.3 wt% O, more preferably less than 0.2 wt% O, and most preferably between 0.06 and 0.18 wt%, based on the total mass of the alloy composition.

8. The titanium alloy composition according to any of claims 1 and 3 to 7, wherein either the first, or the second, or the third alloy composition further comprises from 0.05 to 0.5 wt% of either TiB or TiB₂, and/or from 0.02 to 0.2 wt% Y₂O₃, based on the total mass of the alloy composition.

9. The titanium alloy composition according to any of claims 1 and 3 to 8, wherein the either the first, or the second, or the third alloy composition further comprises a total amount of from 0.1 to 5.0 wt% Sn and/or from 0.1 to 6.0 wt% Zr, based on the total mass of the titanium alloy composition.

10. A welding wire, **characterised in that** it is made of a titanium alloy composition according to any of claims 1 to 9.

11. The welding wire according to claim 10, wherein the welding wire has a nominal diameter in the range from 0.5 to 10.0 mm, preferably from 0.7 to 5.0 mm, more preferably from 0.8 to 2.5 mm, more preferably from 0.9 to 2.0 mm, more preferably from 1.0 to 1.8 mm, and most preferably from 1.2 to 1.6 mm.

12. A metal powder, **characterised in that** it is made of a titanium alloy composition according to any of claims 1 to 9.

13. The metal powder according to claim 12, wherein the metal powder has a nominal diameter in the range of from 15 to 200 µm, as determined by laser diffraction analysis according to standard ISO 13320:2020.

14. A method for manufacturing a three-dimensional component made of a titanium alloy, **characterised in that** the method comprises forming the three-dimensional component by an additive manufacturing process applying a titanium alloy according to anyone of claims 1 to 9.

15. The method according to claim 14, wherein the additive manufacturing comprises:
- building the three-dimensional component by fusing together successive deposits of the titanium alloy onto a base material, by:
- using a melting tool to heat and melt a feedstock of the titanium alloy and depositing the molten feedstock onto a deposition area of the base material, and
either:
a) moving the base material relative to the position of the first melting tool in a predetermined pattern such that the successive deposits of molten feedstock solidifies and forms the three-dimensional component,
or:
b) moving the first melting tool relative to the base material in a predetermined pattern such that the successive deposits of molten feedstock solidifies and forms the three-dimensional component.

16. The method according to claim 14 or 15, wherein the method further comprises applying a feedstock of the titanium alloy shaped into a welding wire according to claim 10 or 11.

17. The method according to claim 16, wherein the method further comprises applying:
- a first plasma transferred arc torch (PTA) electrically connected to a first DC power source such that an electrode of the first PTA-torch becomes the cathode and the base material becomes the anode, and
- a second plasma transferred arc torch (PTA) electrically connected to a second DC power source such that an electrode of the second PTA-torch becomes the cathode and the welding wire becomes the anode.

18. Use of a titanium alloy according to anyone of claims 1 to 9 in an additive manufacturing process.
